# EUROPÄISCHE PATENTANMELDUNG

(11) **EP 1 495 862 A1**
(43) Veröffentlichungstag der Anmeldung: **12.01.2005**
(21) Anmeldenummer: 04013400.9
(22) Anmeldetag: 07.06.2004
(51) Int. Cl.: B32B 27/40, B29C 45/14

(54) **Verbundsysteme zur Herstellung von dekorierten Kunststoffformteilen und ein Verfahren zur Herstellung der Verbundsysteme**

(30) Priorität: 18.06.2003 DE 10327453
(71) Anmelder: Bayer MaterialScience AG, 51368 Leverkusen (DE)
(72) Erfinder: Berger, Armin, 40764 Langenfeld (DE); Post, Bernd, 47441 Moers (DE); Winkler, Jürgen, 40764 Langenfeld (DE); Nickel, Jörg, 41539 Dormagen (DE)

(57) **Zusammenfassung**

Die Erfindung betrifft Verbundsysteme (Folienlaminate), insbesondere auf Basis von Polycarbonat (PC), mit denen nach dem InMold-Decoration (IMD-) Verfahren Kunststoffformteile hergestellt werden können, wobei die Verbundsysteme mittels eines elektrostatischen Digitaldruckverfahrens auf der rückwärtigen Oberfläche der Deckfolie beschriftet oder dekoriert sind, ein Verfahren zur Herstellung der Verbundsysteme und ihre Verwendung.

## Beschreibung

Die Erfindung betrifft Verbundsysteme (Folienlaminate), insbesondere auf Basis von Polycarbonat (PC), mit denen nach dem InMold-Decoration (IMD-) Verfahren Kunststoffformteile hergestellt werden können, wobei die Verbundsysteme mittels eines elektrostatischen Digitaldruckverfahrens auf der rückwärtigen Oberfläche der Deckfolie beschriftet oder dekoriert sind, ein Verfahren zur Herstellung der Verbundsysteme und ihre Verwendung.

Im IMD-Verfahren werden transparente Kunststoff-Folien, insbesondere PC-Folien rückseitig überwiegend im Siebdruckverfahren bedruckt, gegebenenfalls mit einer weiteren Folie verklebt, zumeist anschließend verformt, danach in ein Spritzgießwerkzeug eingelegt und dann mit einem thermoplastischen Kunststoff hinterspritzt, um fertig dekorierte Formteile zu erhalten.

Dieses Verfahren wird beispielsweise zur Herstellung von dekorierten oder symboltragenden Kunststoffteilen - auch mit Durchlichttechnik - im Automobil, unter anderem für Schalterabdeckungen, Armaturenteile, Armaturblenden, Zierleisten, sowie für Formteile der Telekommunikation, wie Mobiltelefone, Gehäuse, Tastaturen und Schaltmatten, Tasten sowie für Formteile für Haushaltsgeräte und sonstige elektronische Geräte angewendet.

Die besondere Anforderung an die Dekoration ist die Beanspruchung durch die Hinterspritzung, insbesondere durch Hitze und mechanische Scherung und darüber hinaus die Anforderung an die Haftung des hinterspritzten Thermoplasten an die Dekoration. In DE-A 44 24 106 wird ein Schichtaufbau beschrieben, bei dem zum Schutz der Dekoration eine thermoplastische Schicht Verwendung findet, die mit einem Polyurethan-Kleber auf die Farbschicht geklebt ist.

Derartige verklebte Laminate haben den Nachteil, dass sie nur in herkömmlichen Druckverfahren, insbesondere im Siebdruckverfahren mit besonders beständigen, lufttrocknenden und lösemittelhaltigen oder UV-härtenden und Acrylat-haltigen Siebdruckfarben hergestellt werden können. Bei diesen herkömmlichen, nicht digitalen Verfahren ist zwangsläufig die Herstellung einer Druckschablone, eines Druckfilms oder einer Gravurwalze erforderlich, so dass die Wirtschaftlichkeit der mit der IMD-Technik hergestellten Kunststoffteile von einer Mindest-Stückzahl abhängig ist.

Bei der Verwendung von digitalen Drucktechniken, bei denen mittels elektrostatischer Kräfte niedrig schmelzende Farbschichten aufgebracht werden, sind diese gegenüber den Beanspruchungen der Hinterspritzung mit höherschmelzenden Thermoplasten besonders zu schützen.

Zudem sind diese niedrig schmelzenden Farbschichten nicht kompatibel zu den bekannten Schmelzeklebem, so dass sich kein Folienverbund mit ausreichender Haftfestigkeit erzielen lässt.

Aufgabe der vorliegenden Erfindung war es daher, einen Verbund zur Verfügung zu stellen,
- der die Bedruckung und Dekoration der Folie mit einem digitalen, elektrostatischen Druckverfahren ermöglicht,
- der Hinterspritzung mit höherschmelzenden Thermoplasten standhält und darüber hinaus eine gute Laminierfestigkeit aufweist.

Diese Aufgabe konnte durch das erfindungsgemäße Verbundsystem gelöst werden.

Gegenstand der Erfindung ist ein Verbundsystem (Laminat), das für die Herstellung von digital dekorierten Kunststoffformteilen nach dem IMD-Verfahren eingesetzt werden kann, bestehend aus
A) einer thermoplastischen, lichtdurchlässigen Kunststofffolie mit einer Dicke von 20 bis 1000 µm,
B) einer Primerschicht mit einer Schichtdicke von 0,5 bis 20 µm,
C) einer Farbschicht mit einem niedrigen Schmelzpunkt, vorzugsweise mit einer Schichtdicke von 0,5 µm bis 80 µm, auf Basis von Pigmenten und eines Bindemittels aus Kunststoff mit einem Erweichungspunkt unter dem Erweichungspunkt der Kunststofffolie (A),
D) gegebenenfalls einer zweiten Primerschicht mit einer Schichtdicke von 0,5 bis 20 µm, die von B) verschieden sein kann,
E) einer Schicht aus einem thermoplastischen Polyurethan mit einer Härte von 55 bis 95 Shore A und einer Reißfestigkeit größer 15 MPa (ISO 37), welches ein Reaktionsprodukt ist aus einem organischen Diisocyanat (a), mindestens einem zerewitinoff-aktiven Polymerdiol mit im Mittel mindestens 1,8 bis höchstens 2,5 zerewitinoff-aktiven Wasserstoffatomen und mit einem zahlenmittleren Molekulargewicht von 600 bis 5000 g/mol (b) und mindestens einem zerewitinoff-aktiven Diol mit im Mittel mindestens 1,8 bis höchstens 2,5 zerewitinoff-aktiven Wasserstoffatomen und mit einem zahlenmittleren Molekulargewicht von 60 bis 500 g/mol als Kettenverlängerer (c), wobei das Molverhältnis der NCO-Gruppen des Diisocyanats (a) zu den zerewitinoff-aktiven Wasserstoffatomen aus (b) und (c) 0,9 bis 1,2, bevorzugt 0,95 bis 1,1 beträgt,
F) einer thermoplastischen Kunststofffolie mit einer Dicke von 20 bis 1000 µm, vorzugsweise von 50 bis 500 µm, die von (A) verschieden sein kann.

Das Verbundsystem kann auch aus den vorgenannten Folien/Schichten bestehen jedoch in folgender Reihenfolge: A), E), D), C), B), F).

Ein weiterer Gegenstand der Erfindung ist ein Formteil bestehend aus
I) den erfindungsgemäßen Verbundsystemen (Laminaten) und
II) einem hinterspritzten thermoplastischen Kunststoff.

Ein weiterer Gegenstand der Erfindung ist ein Verfahren zur Herstellung des erfindungsgemäßen Verbundsystems, welches dadurch gekennzeichnet ist, dass
a) auf eine lichtdurchlässige, thermoplastische Kunststofffolie (A) mit einer Dicke von 20 bis 1000 µm eine Primerschicht (B) in einer Dicke von 0,5 bis 20 µm aufgebracht wird,
b) danach eine Farbschicht (C) mittels elektrostatischem Druckverfahren in Form von flüssigen Farben oder Tinten auf Basis von Pigmenten und Bindemitteln aus Kunststoffen mit einem Erweichungspunkt, der unter dem Erweichungspunkt der Kunststofffolie (A) liegt, vorzugsweise in einer Dicke von 0,5 bis 80 µm aufgebracht wird,
c) gegebenenfalls eine zweite Primerschicht (D), die von der ersten Primerschicht (B) verschieden sein kann, in einer Dicke von 0,5 bis 20 µm aufgebracht wird,
d) eine mit thermoplastischem Polyurethan (E) beschichtete, thermoplastische Kunststofffolie (F) mit einer Dicke von 20 bis 1000 µm, vorzugsweise 50 bis 500 µm auf das Schichtsystem, bestehend aus (A), (B), (C) und gegebenenfalls (D), laminiert wird, wobei sich zusätzlich auf dieser mit TPU beschichteten Kunststofffolie gegebenenfalls eine Primerschicht (D) befindet.

Ein weiterer Gegenstand der Erfindung ist ein Verfahren zur Herstellung des erfindungsgemäßen Verbundsystems, welches dadurch gekennzeichnet ist, dass
a) auf eine thermoplastische Kunststofffolie (F) mit einer Dicke von 20 bis 1000 µm eine Primerschicht (B) in einer Dicke von 0,5 bis 20 µm aufgebracht wird,
b) danach eine Farbschicht (C) mittels elektrostatischem Druckverfahren in Form von flüssigen Farben oder Tinten auf Basis von Pigmenten und Bindemitteln aus Kunststoffen mit einem Erweichungspunkt, der unter dem Erweichungspunkt der Kunststofffolie (A) liegt, vorzugsweise in einer Dicke von 0,5 bis 80 µm aufgebracht wird,
c) gegebenenfalls eine zweite Primerschicht (D), die von der ersten Primerschicht (B) verschieden sein kann, in einer Dicke von 0,5 bis 20 µm aufgebracht wird,
d) eine mit thermoplastischem Polyurethan (E) beschichtete, thermoplastische, lichtdurchlässige Kunststofffolie (A) mit einer Dicke von 20 bis 1000 µm, vorzugsweise 50 bis 500 µm auf das Schichtsystem, bestehend aus (F), (B), (C) und gegebenenfalls (D), laminiert wird, wobei sich zusätzlich auf dieser mit TPU beschichteten Kunststofffolie gegebenenfalls eine Primerschicht (D) befindet.

Ein weiterer Gegenstand der Erfindung ist ein Verfahren zur Herstellung des erfindungsgemäßen Formteils, welches dadurch gekennzeichnet ist, dass
(i) das erfindungsgemäße Verbundsystem (Laminat) gegebenenfalls verformt wird,
(ii) gegebenenfalls die überstehenden Reste des verformten Verbundsystems (Laminats) abgetrennt werden,
(iii) das Verbundsystem (Laminat) mit einem thermoplastischen Kunststoff hinterspritzt wird.

Die Kunststofffolie (A) bzw. die Kunststofffolie (F) bestehen vorzugsweise aus Polycarbonat (PC), Polyestercarbonat (PEC), Acrylnitril-Butadien-Styrol (ABS), Styrol-Acrylnitril (SAN), Polybutylenterephthalat (PBT), Polyethylenterephthalat (PET), Polyethylenglykolnaphthalat (PEN), Polytrimethylenglykolnaphthalat (PMN), Polymethylmethacrylat (PMMA), amorphes Polyamid (PA), Polyvinylchlorid (PVC), Polyethersulfon (PES), Polyarylsulfon (PAR), Polysulfon (PSU), Polyetherimid (PEI), Cycloolefine (COC) aliphatische Polyketone, deren Blends oder den möglichen Copolymeren dieser Kunststoffe. Bevorzugt werden Produkte aus den genannten Stoffgruppen, die transparent sind. Besonders bevorzugt werden PC, PC-PBT-Blends und PC-PET-Blends als Kunststoff eingesetzt.

Im erfindungsgemäßen Verbundsystem wird auf die lichtdurchlässige Kunststofffolie ein Primer (B) aufgetragen. Dieser Primer B) bzw. Primer D) bestehen vorzugsweise aus einem Copolyamid auf Basis von Dimerfettsäuren. Der Primer liegt bevorzugt als Lösung oder als Dispersion eines sogenannten Schmelzeklebers (z.B. Makromelt® 6239 der Fa. Henkel) in einem organischen Lösemittel, bevorzugt in n-Propanol, in einer Konzentration von 5 bis 20 Vol.-% vor. Die Dispersion oder Lösung wird einfach oder mehrfach aufgetragen, bis vorzugsweise eine Beschichtungsstärke von 0,5 bis 5 µm vorliegt.

Die Farbschicht (Dekorschicht) C) basiert auf Pigmenten und einem Bindemittel aus Kunststoff. Als Bindemittel werden solche eingesetzt, deren Erweichungstemperatur unterhalb der Erweichungstemperatur der Kunststofffolie A) und unterhalb der Verarbeitungstemperatur des Kunststoffes, mit dem zur Herstellung des Formteiles hinterspritzt wird, liegt. Als Pigmente werden die Pigmente eingesetzt, die beim elektrostatischen Druck verwendet werden. Diese Pigmente werden beispielsweise in US-A 5 407 771 beschrieben. Die Farbschicht wird erzeugt, indem Tonerdispersionen verwendet werden, die im vorgenannten Patent sowie in den im nachfolgenden Absatz genannten Patenten beschrieben sind. Der Inhalt dieser Patente ist Teil der Beschreibung.

Auf die mit dem Primer B) vorbehandelte Folie erfolgt die Bedruckung (Erstellung der Farbschicht) vorzugsweise mit dem sogenannten elektrostatischen Bebilderungsverfahren der Firma Hewlett-Packard-Indigo mit einer "Omnius Multistream"-Maschine (heute: HP Indigo Press s2000). Diese Bedruckung ist in US-A 4 842 974, US-A 4 860 924, US-A 4 980 256, US-A 5 286 593 und US-A 5 300 390 beschrieben. Die Druck-Maschine erzeugt ein Druckbild auf einer fotoempfindlichen, elektronischen Bild-Trommel und überträgt das Teilbild (je eine Prozessfarbe (Y, M, C, K) oder Spotfarbe pro Umdrehung) auf einen Zwischenträger. Dieser Zwischenträger sammelt sämtliche Farbschichten (bis 16 Farbschichten), bevor sie in einem Schritt auf das Substrat - in diesem Fall auf die mit Primer behandelte Folie - übertragen werden.

Diese derart dekorierte Folie wird dann bevorzugt für die Verwendung im IMD-Prozess geschützt, insbesondere gegen die Beanspruchungen (Wärme und Scherung) der Hinterspritzung mit hochschmelzenden Thermoplasten, wie beispielsweise PC. Bevorzugt wird der Druck mit einer thermoplastischen Folie (F) geschützt. Diese Folie ist in einem festen Verbund über die Schicht (E) mit einem Mindesthafiwert von 8 N/mm mit dem Verbund aus A), B), C) und gegebenenfalls D) verknüpft.

Die Schicht (E) besteht vorzugsweise aus einer extrudierten Schicht aus TPU, das aus organischen Diisocyanaten (a), Polymerdiolen (b) und Diol-Kettenverlängerern (c) hergestellt wird.

Als organische Diisocyanate (a) kommen beispielsweise aliphatische, cycloaliphatische, araliphatische, heterocyclische und aromatische Diisocyanate in Betracht, wie sie in Justus Liebigs Annalen der Chemie, 562, S.75-136 beschrieben werden.

Im einzelnen seien beispielhaft genannt: aliphatische Diisocyanate, wie Hexamethylendiisocyanat, cycloaliphatische Diisocyanate, wie Isophorondiisocyanat, 1,4-Cyclohexan-diisocyanat, 1-Methyl-2,4-cyclohexan-diisocyanat und 1-Methyl-2,6-cyclohexan-diisocyanat sowie die entsprechenden Isomerengemische, 4,4'-Dicyclohexylmethan-diisocyanat, 2,4'-Dicyclohexylmethan-diisocyanat und 2,2'-Dicyclohexylmethan-diisocyanat sowie die entsprechenden Isomerengemische, aromatische Diisocyanate, wie 2,4-Toluylendiisocyanat, Gemische aus 2,4-Toluylendiisocyanat und 2,6-Toluylendiisocyanat, 4,4'-Diphenylmethandiisocyanat, 2,4'-Diphenylmethandiisocyanat und 2,2'-Diphenylmethandiisocyanat, Gemische aus 2,4'-Diphenylmethandiisocyanat und 4,4'-Diphenylmethandiisocyanat, urethanmodifizierte flüssige 4,4-Diphenylmethandiisocyanate und 2,4'-Diphenylmethandiisocyanate, 4,4'-Diisocyanatodiphenyl-ethan-(1,2) und 1,5-Naphthylendiisocyanat. Vorzugsweise verwendet werden 1,6-Hexamethylendiisocyanat, Isophorondiisocyanat, Dicyclohexylmethandiisocyanat, Diphenylmethandiisocyanat-Isomerengemische mit einem 4,4'-Diphenylmethandiisocyanatgehalt von >96 Gew.-% und insbesondere 4,4'-Diphenylmethandiisocyanat und 1,5-Naphthylendiisocyanat. Die genannten Diisocyanate können einzeln oder in Form von Mischungen untereinander zur Anwendung kommen. Sie können auch zusammen mit bis zu 15 Gew.-% (berechnet auf die Gesamtmenge an Diisocyanat) eines Polyisocyanates verwendet werden, beispielsweise Triphenylmethan-4,4',4"-triisocyanat oder Polyphenyl-polymethylen-polyisocyanaten.

Als Polymerdiol (b) werden lineare hydroxylterminierte Polyole mit einem Molekulargewicht von 600 bis 5000 eingesetzt. Produktionsbedingt enthalten diese oft kleine Mengen an nichtlinearen Verbindungen. Häufig spricht man daher auch von "im wesentlichen linearen Polyolen". Bevorzugt sind Polyester-, Polyether-, Polycarbonat-Diole oder Gemische aus diesen.

Geeignete Polyether-Diole können dadurch hergestellt werden, dass man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2-Butylenoxid und 2,3-Butylenoxid. Vorzugsweise werden Ethylenoxid, Propylenoxid und Mischungen aus 1,2-Propylenoxid und Ethylenoxid eingesetzt. Die Alkylenoxide können einzeln, alternierend nacheinander oder als Mischungen verwendet werden. Als Startermoleküle kommen beispielsweise in Betracht: Wasser, Aminoalkohole, wie N-Alkyl-diethanolamine, beispielsweise N-Methyl-diethanol-amin, und Diole, wie Ethylenglykol, 1,3-Propylenglykol, 1,4-Butandiol und 1,6-Hexandiol. Gegebenenfalls können auch Mischungen von Startermolekülen eingesetzt werden. Geeignete Polyether-Diole sind ferner die hydroxylgruppenhaltigen Polymerisationsprodukte des Tetrahydrofurans. Es können auch trifunktionelle Polyether in Anteilen von 0 bis 30 Gew.-%, bezogen auf die bifunktionellen Polyether, eingesetzt werden, jedoch höchstens in solcher Menge, dass ein thermoplastisch verarbeitbares Produkt entsteht. Die im wesentlichen linearen Polyether-Diole besitzen Molekulargewichte von 600 bis 5000. Sie können sowohl einzeln als auch in Form von Mischungen untereinander zur Anwendung kommen.

Geeignete Polyester-Diole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyester-Diole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, wie Ethylenglykol, Diethylenglykol, 1,4-Butandiol, 1,5-Pentandiol, 1,6-Hexandiol, 1,10-Decandiol, 2,2-Dimethyl-1,3-propandiol, 1,3-Propandiol und Dipropylenglykol. Je nach den gewünschten Eigenschaften können die mehrwertigen Alkohole allein oder gegebenenfalls in Mischung untereinander verwendet werden. Geeignet sind ferner Ester der Kohlensäure mit den genannten Diolen, insbesondere solchen mit 4 bis 6 Kohlenstoffatomen, wie 1,4-Butandiol oder 1,6-Hexandiol, Kondensationsprodukte von Hydroxycarbonsäuren, beispielsweise Hydroxycapronsäure und Polymerisationsprodukte von Lactonen, beispielsweise gegebenenfalls substituierten Caprolactonen. Als Polyester-Diole vorzugsweise verwendet werden Ethandiolpolyadipate, 1,4-Butandiolpolyadipate, Ethandiol-1,4-butandiol-polyadipate, 1,6-Hexandiol-neopentylglykol-polyadipate, 1,6-Hexandiol-1,4-butandiol-polyadipate und Polycaprolactone. Die Polyester-Diole besitzen Molekulargewichte von 600 bis 5000 und können einzeln oder in Form von Mischungen untereinander zur Anwendung kommen.

Als Kettenverlängerungsmittel (c) werden Diole mit einem Molekulargewicht von 60 bis 500 eingesetzt, vorzugsweise aliphatische Diole mit 2 bis 14 Kohlenstoffatomen, wie z.B. Ethandiol, 1,6-Hexandiol, Diethylenglykol, Dipropylenglykol und insbesondere 1,4-Butandiol. Geeignet sind jedoch auch Diester der Terephthalsäure mit Glykolen mit 2 bis 4 Kohlenstoff-Atomen, wie z.B. Terephthalsäure-bis-ethylenglykol oder Terephthalsäure-bis-1,4-butandiol, Hydroxyalkylenether des Hydrochinons, wie z.B. 1,4-Di(-hydroxyethyl)-hydrochinon, ethoxylierte Bisphenole. Es können auch Gemische der oben genannten Kettenverlängerer eingesetzt werden. Daneben können auch kleinere Mengen an Triolen zugesetzt werden.

Weiterhin können in geringen Mengen auch übliche monofunktionelle Verbindungen eingesetzt werden, z.B. als Kettenabbrecher oder Entformungshilfen. Beispielhaft genannt seien Alkohole wie Oktanol und Stearylalkohol oder Amine wie Butylamin und Stearylamin.

Zur Herstellung der TPU können die Aufbaukomponenten, gegebenenfalls in Gegenwart von Katalysatoren, Hilfsmitteln und Zusatzstoffen, in solchen Mengen zur Reaktion gebracht werden, dass das Äquivalenzverhältnis von NCO-Gruppen zur Summe der NCO-reaktiven Gruppen, insbesondere der OH-Gruppen der niedermolekularen Diole/Triole und Polyole 0,9:1,0 bis 1,2:1,0, vorzugsweise 0,95:1,0 bis 1,10:1,0 beträgt.

Geeignete Katalysatoren zur TPU-Herstellung sind die nach dem Stand der Technik bekannten und üblichen tertiären Amine, wie z.B. Triethylamin, Dimethylcyclohexylamin, N-Methylmorpholin, N,N'-Dimethyl-piperazin, 2-(Dimethylamino-ethoxy)-ethanol, Diazabicyclo-(2,2,2)-octan und ähnliche sowie insbesondere organische Metallverbindungen wie Titansäureester, Eisenverbindungen, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Bevorzugte Katalysatoren sind organische Metallverbindungen, insbesondere Titansäureester, Eisen- oder Zinnverbindungen.

Neben den TPU-Komponenten und den Katalysatoren können auch andere Hilfsmittel und Zusatzstoffe zugesetzt werden. Genannt seien beispielsweise Gleitmittel wie Fettsäureester, deren Metallseifen, Fettsäureamide und Siliconverbindungen, Antiblockmittel, Inhibitoren, Stabilisatoren gegen Hydrolyse, Licht, Hitze und Verfärbung, Flammschutzmittel, Farbstoffe, Pigmente, anorganische oder organische Füllstoffe und Verstärkungsmittel. Verstärkungsmittel sind insbesondere faserartige Verstärkungsstoffe wie anorganische Fasern, die nach dem Stand der Technik hergestellt werden und auch mit einer Schlichte beaufschlagt sein können. Nähere Angaben über die genannten Hilfs- und Zusatzstoffe sind der Fachliteratur zu entnehmen, beispielsweise J.H. Saunders, K.C. Frisch: "High Polymers", Band XVI, Polyurethane, Teil 1 und 2, Interscience Publishers 1962 bzw. 1964, R.Gächter, H.Müller (Ed.): Taschenbuch der Kunststoff-Additive, 3.Ausgabe, Hanser Verlag, München 1989, oder DE-A 29 01 774.

Weitere Zusätze, die in das TPU eingearbeitet werden können, sind Thermoplaste, beispielsweise Polycarbonate und Acrylnitril-Butadien-Styrol-Terpolymerisate, insbesondere ABS. Ebenfalls können andere Elastomere wie Kautschuk, Ethylen-Vinylacetatcopolymerisate, Styrol-Butadiencopolymerisate sowie andere TPU verwendet werden. Weiterhin zur Einarbeitung geeignet sind handelsübliche Weichmacher wie Phosphate, Phthalate, Adipate, Sebacate und Alkylsulfonsäureester.

Die TPU werden ohne Zusatz von Lösungsmitteln diskontinuierlich oder kontinuierlich hergestellt. Kontinuierlich können die erfindungsgemäßen TPU beispielsweise mit dem Mischkopf/Bandverfahren oder dem sogenannten Extruderverfahren hergestellt werden. Im Extruderverfahren, z.B. in einem Mehrwellenextruder, kann die Dosierung der Komponenten a), b) und c) gleichzeitig, d.h. im one-shot-Verfahren, oder nacheinander, d.h. nach einem Prepolymer-Verfahren, erfolgen. Dabei kann das Prepolymer sowohl batchweise vorgelegt als auch kontinuierlich in einem Teil des Extruders oder in einem separaten, vorgeschalteten Prepolymeraggregat hergestellt werden.

Die TPU haben eine Härte von 55 bis 95 ShoreA (ISO 868) und eine Reißfestigkeit größer 15 MPa (ISO 37) .

Besonders bevorzugt wird für das Laminieren des dekorierten Verbundes aus A), B), C) und gegebenenfalls D) eine Folie F), die die Schicht (E) bereits aufweist, verwendet. Bei der Herstellung wird entweder eine TPU-Folie oder die Folie (F) vorgelegt und dann entsprechend der Thermoplast der Folie (F) oder das TPU in der gewünschten Dicke aufextrudiert. Eine Co-Extrusion des TPU und des Thermoplasten ist ebenfalls möglich.

Die Folie (F), die mit dem TPU vorzugsweise bereits beschichtet ist, kann gegebenenfalls zusätzlich mit einem Primer auf dem TPU versehen sein.

Die transparente, geprimerte und bedruckte Folie wird bevorzugt mit der TPU beschichteten Folie bei Temperaturen zwischen 110 bis 140°C, bevorzugt bei 120 bis 130°C zusammenlaminiert. Man erhält ein festes Verbundsystem mit einer sehr hohen Laminierfestigkeit.

Charakteristisch für das IMD-Verfahren ist die dreidimensionale Verformung von Folien bzw. Verbundsystemen vor der Hinterspritzung. Das erfindungsgemäße Verbundsystem wird vorzugsweise bei gemäßigten Temperaturen verformt, wie z.B. durch Prägen oder mittels des sogenannten "High-Pressure-Forming" -Verfahrens (DE-A 3 844 584). Vorzugsweise erfolgt die Verformung des Verbundsystems unterhalb der Erweichungstemperatur der Folie (A), so dass deren Texturierung erhalten bleibt und die Druckschicht nicht beeinträchtigt wird.

Nach dem Formen werden die erfindungsgemäßen Verbundsysteme vorzugsweise entsprechend ihrer Formteilkontur von überstehenden Teilen durch Stanzen, Beschneiden, Laserschneiden, Wasserstrahlschneiden oder Fräsen getrennt.

Anschließend wird das geformte und beschnittene Verbundsystem in ein Spritzgießwerkzeug eingelegt und mit thermoplastischem Kunststoff, bevorzugt PC oder einem Blend aus PC und ABS hinterspritzt. Man erhält ein fertig dekoriertes Kunststoffformteil.

Die erfindungsgemäßen Verbundsysteme bzw. die daraus hergestellten Kunststoffformteile werden als Tasten, Schalter und Armaturen, insbesondere im KFZ-Bereich und im Elektronikbereich, beispielsweise für Schalterabdeckungen, Armaturenteile, -blenden, Zierleisten sowie für Formteile der Telekommunikation wie Mobiltelefone, Gehäuse, Tastaturen und Schaltmatten, Tasten sowie Formteile für Haushaltsgeräte und sonstige elektronische Geräte sowie für Werbetafeln und als Verpackungsartikel verwendet.

Die Erfindung soll anhand der nachfolgenden Beispiele näher erläutert werden.

### Beispiele

### Beispiel a):

Eine Polycarbonatfolie (Makrofol® DE 1-4 der Bayer AG) mit einer Dicke von 0,175 mm wurde mit einem Primer (Topaz von Hewlett-Packard Company, Maastricht) in einer Dicke von 0,001 mm versehen.

Danach wurden farbige Druckfelder aus den 4 Grundfarben Gelb (Y), Purpur (M), Blaugrün (C) und Schwarz (K) auf die Folie mittels einer HP Indigo Press s2000 Maschine gedruckt. Die Dicke der Farbschicht betrug zwischen 0,001 bis 0,009 mm.

Die bedruckten Folien wurden in ein Spritzgießwerkzeug eingelegt und hinterspritzt Verfahrensparameter:

| | |
|---|---|
| Form | 75 x 155 mm Platte |
| Dicke | eingestellt auf 2,4 mm |
| Anguss | zentraler Stangenanguss mit einem Durchmesser von 8 mm |
| Hinterspritzung | mit Polycarbonat (Makrolon® 2400 von Bayer AG) |
| Schmelzetemp. | 290 °C |
| Werkzeugtemp. | 80 °C |
| Schneckendurchmesser | 25 mm |
| Einspritzgeschwindigkeit | 38 mm/sec |
| Einspritzzeit | 1,8 sec |
| Ergebnis | |

Nach der Hinterspritzung mit dem Polycarbonat wies das Formteil großflächige Farbauswaschungen auf. Das Druckbild war vollständig zerstört.

### Beispiel b):

Der Versuch wurde wie unter a) beschrieben durchgeführt, mit dem Unterschied, dass zusätzlich auf die digital aufgebrachte Farbschicht der Deckfolie eine weitere Schicht des Primers Topaz auf die Farbschicht in einer Dicke von 0,001 und 0,002 mm aufgetragen wurde. Zum Schutz der Dekoration wurde eine Polycarbonatfolie mit einer Wanddicke von 0,175 mm (Makrofol® DE 1-4 von Bayer AG) auflaminiert. Diese Schutzfolie war zuvor mit einem Kleber in einer Dicke von etwa 15 µm durch Siebdruck beschichtet worden. Der verwendete Kleber war Aquapress® ME der Fa. Pröll, Weissenburg/Bayern (wässrige anionische Dispersion aus hochmolekularem, vernetztem Polyesterpolyurethan).

| Parameter beim Laminieren | |
|---|---|
| Heizpresse | von der Fa. Bürkle |
| Temperatur | 120 °C |
| Anpressdruck | 33 bar |
| Presszyklus | 20 min |
| Ergebnis | |

Nach der Hinterspritzung wies das Formteil trotz Schutzfolie großflächige Farbauswaschungen auf. Das Druckbild war zerstört. Die Laminierfestigkeit des Folienverbundes war unzureichend. Der Folienverbund konnte im Zugversuch auseinandergezogen werden, wobei die Farbschicht aufspleißt und sowohl auf der Deck- als auch der Schutzfolie verblieb.

### Beispiel c)

Der Versuch wurde wie unter b) beschrieben durchgeführt, allerdings wurde eine andere Spritzgießform verwendet; und die Wanddicke der Schutzfolie betrug 0,2 mm:

| | |
|---|---|
| Form | 99 mm x 129 mm Platte |
| Dicke | eingestellt auf 3 mm |
| Anguss | Filmanguss auf Schmalseite, 99 mm x 1,8 mm Dicke |
| Hinterspritzung | mit Polycarbonat (Makrolon® 2400 von Bayer AG) |
| Schmelzetemp. | 290 °C |
| Werkzeugtemp. | 60 °C |
| Einspritzzeit | 1,67 sec |
| Ergebnis | |

Nach Hinterspritzung wies das Formteil zwar keine Farbauswaschungen oder andere Farbänderungen auf, jedoch war die Laminierfestigkeit weiterhin unzureichend.

### Beispiel d): erfindungsgemäß

Eine Polycarbonatfolie (Makrofol® DE 1-4 der Bayer AG) mit einer Dicke von 0,175 mm wurde mit einem Primer (Topaz von Hewlett-Packard Company, Maastricht) in einer Dicke von 0,001 mm versehen.

Danach wurden farbige Druckfelder aus den 4 Grundfarben Gelb (Y), Purpur (M), Blaugrün (C) und Schwarz (K) in verschiedenen Deckungsgraden auf die Folie gedruckt. Die Dicke der Farbschicht betrug zwischen 0,002 bis 0,008 mm.

Auf die Farbschicht wurde eine zusätzliche Schicht des Primers (Topaz® von Hewlett-Packard Company) mit einer Dicke von etwa 0,002 mm aufgebracht.

Parallel dazu wurde eine Polycarbonatfolie (Makrofol® DE 6-2 von Bayer AG) mit einer Dicke von 0,1 mm mit einer 0,025 mm dicken Schicht eines 70 ShoreA-TPU (Desmopan® KU2-8670 von Bayer AG) versehen.

Die beiden vorbehandelten Folien wurden wie unter b) beschrieben zusammenlaminiert.

| | |
|---|---|
| Parameter | |
| Heizpresse | Fa. Bürkle |
| Temperatur | 120 °C |
| Anpressdruck | 33 bar |
| Presszyklus | 20 min |

Das Verbundsystem wurde in ein Spritzgießwerkzeug eingelegt und wie unter a) beschrieben hinterspritzt.

### Ergebnis:

Die Laminierfestigkeit war so gut, dass der Schutzfilm eher riss als der Verbund TPU-Schicht / Primer / Farbschicht.

Nach dem Hinterspritzen war das Druckbild / die Dekoration nicht beschädigt, obwohl der aufgebrachte Schutzfilm sehr dünn gewählt war und der direkte Stangenanguss eine besonders hohe Beanspruchung an das Laminat und die Dekoration stellte.

## Patentansprüche

1. Verbundsystem bestehend aus
A) einer thermoplastischen, lichtdurchlässigen Kunststofffolie mit einer Dicke von 20 bis 1000 µm
B) einer Primerschicht mit einer Schichtdicke von 0,5 bis 20 µm,
C) einer Farbschicht mit einem niedrigen Schmelzpunkt auf Basis von Pigmenten und eines Bindemittels aus Kunststoff mit einem Erweichungspunkt unter dem der Kunststofffolie (A),
D) gegebenenfalls einer zweiten Primerschicht mit einer Schichtdicke von 0,5 bis 20 µm, die von B) verschieden sein kann,
E) einer Schicht aus einem thermoplastischen Polyurethan mit einer Härte von 55 bis 95 Shore A und einer Reißfestigkeit größer 15 MPa (ISO 37), welches ein Reaktionsprodukt ist aus einem organischen Diisocyanat (a), mindestens einem zerewitinoff-aktiven Polymerdiol mit im Mittel mindestens 1,8 bis höchstens 2,5 zerewitinoff-aktiven Wasserstoffatomen und mit einem zahlenmittleren Molekulargewicht von 600 bis 5000 g/mol (b) und mindestens einem zerewitinoff-aktiven Diol mit im Mittel mindestens 1,8 bis höchstens 2,5 zerewitinoff-aktiven Wasserstoffatomen und mit einem zahlenmittleren Molekulargewicht von 60 bis 500 g/mol als Kettenverlängerer (c), wobei das Molverhältnis der NCO-Gruppen des Diisocyanats (a) zu den zerewitinoff-aktiven Wasserstoffatomen aus (b) und (c) 0,9 bis 1,2, bevorzugt 0,95 bis 1,1 beträgt,
F) einer thermoplastischen Kunststofffolie mit einer Dicke von 20 bis 1000 µm, die von (A) verschieden sein kann.

2. Verbundsystem gemäß Anspruch 1, wobei die Schichten die Reihenfolge A), E), D), C), B) und F) aufweisen.

3. Formteil bestehend aus
I) einem Verbundsystem gemäß Anspruch 1 oder 2
II) einem hinterspritzten thermoplastischen Kunststoff.

4. Verfahren zur Herstellung des Verbundsystems gemäß Anspruch 1, **dadurch gekennzeichnet, dass**
a) auf eine lichtdurchlässige, thermoplastische Kunststofffolie (A) mit einer Dicke von 20 bis 1000 µm eine Primerschicht (B) in einer Dicke von 0,5 bis 20 µm aufgebracht wird,
b) danach eine Farbschicht (C) mit einem niedrigen Schmelzpunkt mittels elektrostatischem Druckverfahren in Form von flüssigen Farben oder Tinten auf Basis von Pigmenten und Bindemitteln aus Kunststoffen mit einem Erweichungspunkt unter dem der Kunststofffolie (A), vorzugsweise in einer Dicke von 0,5 bis 80 µm aufgebracht wird,
c) gegebenenfalls eine zweite Primerschicht (D), die von der ersten Primerschicht (B) verschieden sein kann, in einer Dicke von 0,5 bis 20 µm aufgebracht wird,
d) eine mit thermoplastischem Polyurethan (E) beschichtete, thermoplastische Kunststofffolie (F) einer Dicke von 20 bis 1000 µm, vorzugsweise 50 bis 500 µm auf das Schichtsystem bestehend aus (A), (B), (C) und gegebenenfalls (D) laminiert wird, wobei sich zusätzlich auf dieser mit TPU beschichteten Kunststofffolie gegebenenfalls eine Primerschicht (D) befindet.

5. Verfahren zur Herstellung des Verbundsystems gemäß Anspruch 2, **dadurch gekennzeichnet, dass**
a) auf eine thermoplastische Kunststofffolie (F) mit einer Dicke von 20 bis 1000 µm eine Primerschicht (B) in einer Dicke von 0,5 bis 20 µm aufgebracht wird,
b) danach eine Farbschicht (C) mit einem niedrigen Schmelzpunkt mittels elektrostatischem Druckverfahren in Form von flüssigen Farben oder Tinten auf Basis von Pigmenten und Bindemitteln aus Kunststoffen mit einem Erweichungspunkt unter dem der Kunststofffolie (A), vorzugsweise in einer Dicke von 0,5 bis 80 µm aufgebracht wird,
c) gegebenenfalls eine zweite Primerschicht (D), die von der ersten Primerschicht (B) verschieden sein kann, in einer Dicke von 0,5 bis 20 µm aufgebracht wird,
d) eine mit thermoplastischem Polyurethan (E) beschichtete, thermoplastische, lichtdurchlässige Kunststofffolie (A) mit einer Dicke von 20 bis 1000 µm, vorzugsweise 50 bis 500 µm auf das Schichtsystem, bestehend aus (F), (B), (C) und gegebenenfalls (D), laminiert wird, wobei sich zusätzlich auf dieser mit TPU beschichteten Kunststofffolie gegebenenfalls eine Primerschicht (D) befindet.

6. Verfahren zur Herstellung des Formteiles gemäß Anspruch 2, **dadurch gekennzeichnet, dass**
(i) das Verbundsystem gemäß Anspruch 1 oder 2 gegebenenfalls verformt wird,
(ii) gegebenenfalls die überstehenden Reste des verformten Verbundsystems abgetrennt werden,
(iii) das Verbundsystem mit einem thermoplastischen Kunststoff hinterspritzt wird.

7. Verwendung des Verbundsystems gemäß Anspruch 1 oder 2 zur Herstellung von Kunststoffformteilen.

8. Verwendung des Verbundsystems gemäß Anspruch 1 oder 2 und des Formteils gemäß Anspruch 3 zur Herstellung von Tasten, Tastaturen, Schalter, Armaturen, Zierleisten, Gehäuse, Blenden, Schilder, Werbetafeln, Verpackungsartikeln.
